# EUROPEAN PATENT SPECIFICATION

(11) **EP 1 789 466 B1**
(45) Date of publication and mention of the grant of the patent: **09.11.2011**
(21) Application number: 05795032.1
(22) Date of filing: 02.09.2005
(51) Int. Cl.: C08G 18/79, C08G 18/80, C08G 18/75, C09D 175/04

(54) **BLOCKED ISOCYANATES AND THEIR USE IN COATING COMPOSITIONS**
BLOCKIERTE ISOCYANATE UND IHRE VERWENDUNG IN BESCHICHTUNGSZUSAMMENSETZUNGEN
ISOCYANATES BLOQUES ET UTILISATION DANS DES COMPOSITIONS DE REVETEMENT

(30) Priority: 03.09.2004 US 607107 P
(43) Date of publication of application: 30.05.2007
(73) Proprietor: Dow Global Technologies LLC, Midland, MI 48674 (US)
(72) Inventor: JIMENEZ, Jorge, Lake Jackson, TX 77566 (US); BHATTACHARJEE, Debkumar, Lake Jackson, TX 77566 (US); ARGYROPOULOS, John, N., Midland, MI 48640 (US)
(74) Representative: Hayes, Adrian Chetwynd
(86) International application number: PCT/US2005/031685
(87) International publication number: WO 2006/029141

(56) References cited:
- WO-A-2004/078820
- GB-A- 2 221 465
- US-A- 4 395 529
- US-A- 4 454 317
- PATENT ABSTRACTS OF JAPAN vol. 1999, no. 14, 22 December 1999 (1999-12-22) & JP 11 240936 A (MITSUBISHI GAS CHEM CO INC), 7 September 1999 (1999-09-07)

## Description

The present invention relates to blocked polyisocyanates containing isocyanurate groups derived from bis(isocyanatomethyl)cyclohexane, a process for the preparation of such blocked polyisocyanates and the uses thereof.

Masked or blocked isocyanates have been used extensively as cross-linking agents in aqueous and solvent based coating compositions and are used particularly in two-component polyurethane coatings. Blocked polyisocyanates containing isocyanurate rings are currently used in powder coating applications and solution based applications for producing high performance films and coatings. The use of isocyanurates based on cyclic aliphatic isocyanates, such as hexamethylene diisocyanate (HDI) is limited due to the low Tg of such products. Products based on isophorone diisocyanate (IPDI) is similarly limited as IPDI based products while having good hardness generally have poor impact resistance (flexibility).

Therefore, there continues to be a need for new blocked polyisocyanates that have a good Tg appropriate for powder coating applications, which can be used in solvent-based applications and that give coating with good balance of hardness and flexibility.

The present invention provides a thermally dissociative blocked polyisocyanate composition containg a thermal dissociative blocking agent selected from oximes, phenols, caprolactam, imidazoles and active methylene compounds and isocyanurate moieties wherein the isocyanurate is the reactions product of bis(isocyanatomethyl)cyclohexane wherein the bis(isocyanatomethyl)cyclohexane is a mixture comprising two or more of cis-1,3-bis(isocynatomethyl)cyclohexane, trans-1,3-bis(isocyanatomethyl)cyclohexane, cis-1,4-bis(isocyanatomethyl)cyclohexane and trans-1,4-bis(isocyanatomethyl)cyclohexane with the proviso the composition comprises at least 5 weight percent of the 1,4-isomer. In another embodiment, the invention is to a coating composition comprising
(a) a blocked isocyanurate composition as given above and (b) a polyhydroxyl compound. Such composition can be used in formulations for conventional powder coating or solvent based coating applications.

The invention further provides a method of producing a blocked isocyanurate composition comprising reaction of a polyisocyanate with a thermally dissociative blocking selected from oximes, phenols, caprolactam, imidazoles and active methylene compounds agent at an isocyanate to isocyanate reactive group on the blocking agent ratio to block less than 40 percent of the isocyanate groups and than cyclizing the polyisocyanate in the presence of a trimerization catalyst, deactivating the trimerization catalyst when the desired degree of cyclization is reached, wherein the isocyanurate is derived from two or more of cis-1,3-bis(isocyanatomethyl)cyclohexane, trans-1,3-bis(isocyanatomethyl)cyclohexane, cis1,4-bis(isocyanatomethyl)cyclohexane and trans-1,4-bis(isocyanatomethyl)cyclohexane with the proviso the composition comprises at least 5 weight percent of the 1,4-isomer.

The blocked isocyanates compositions containing isocyanurates of the present invention are prepared from bis(isocyanatomethyl)cyclohexane. Preferably the isocyanate comprises two or more of cis-1,3-bis(isocyanatomethyl)cyclohexane, trans-1,3-bis(isocyanatomethyl)cyclohexane, cis-1,4-bis(isocyanatomethyl)cyclohexane and trans-1,4-bis(isocyanatomethyl)cyclohexane, with the proviso said isomeric mixture comprises at least 5 weight percent of the 1,4-isomer. In a preferred embodiment, the composition contains a mixture of 1,3- and 1,4-isomers. The preferred cycloaliphatic diisocyanates are represented by the following structural Formulas I through IV:

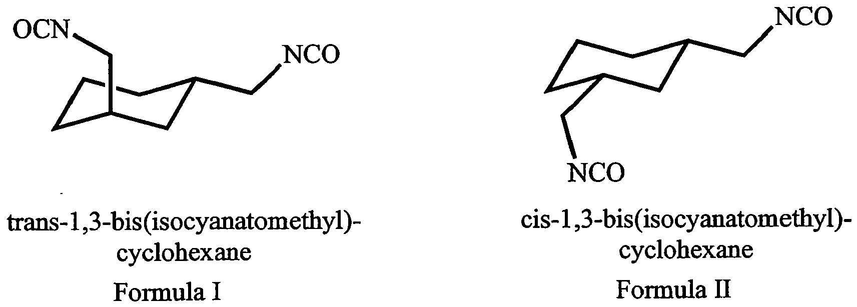

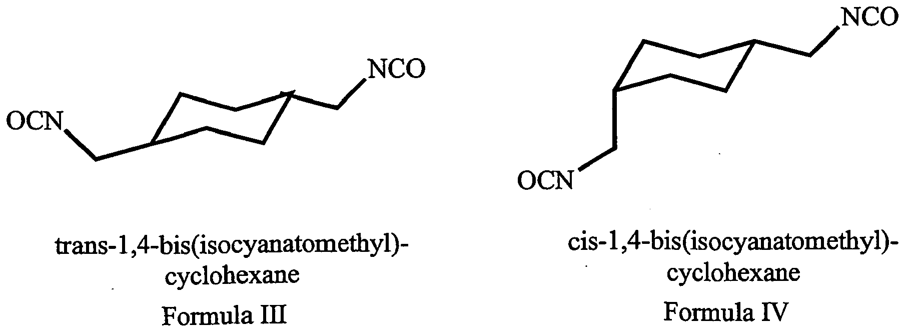

These cycloaliphatic diisocyanates may be used in admixture as manufactured from, for example, the Diels-Alder reaction of butadiene and acrylonitrile, subsequent hydroformylation, then reductive amination to form the amine, that is, cis-1,3-bis(isocyanatomethyl)cyclohexane, trans-1,3-bis(isocyanatomethyl)cyclohexane , cis-1,4-bis(isocyanatomethyl)cyclohexane and trans-1,4- bis(isocyanatomethyl)cyclohexane, followed by reaction with phosgene to form the cycloaliphatic diisocyanate mixture. The preparation of the bis(aminomethyl)cyclohexane is described in U.S. Patent 6,252,121.

In one embodiment, the isocyanurate blocked isocyanate composition is mixed with blocked cycloaliphatic diisocyanates monomers mentioned above. Preferably the blocked polyisocyanate mixture contains at least 20 wt percent of the isocyanurate blocked isocyanate composition and more preferably at least 30 wt percent of the isocyanurate blocked isocyanate composition.

In one embodiment, the isocyanurate isocyanate composition is derived from a mixture containing from 5 to 90 wt percent of the 1,4-isomers. Preferably the isomeric mixture comprises 10 to 80 wt percent of the 1,4-isomers. More preferably at least 20, most preferably at least 30 and even more preferably at least 40 weight percent of the 1,4-isomers.

Optionally, other multifunctional aliphatic or alicyclic isocyanates can be used in the reaction mixture to produce the trimer. Illustrative of such isocyanates are 2,4- and 2,6-toluene diisocyanates, 4.4'-biphenylene diisocyanate, 4,4'-diphenylmethane diisocyanate, meta- and para-phenylene diisocyanates, 1,5-naphthylene diisocyanate, 1,6-hexamethylene diisocyanate, bis(2-isocyanato)fumarate, 4,4'-dicyclohexanemethylene diisocyanate, 1,5-tetrahydronaphthylene diisocyanate, and isophorone diisocyanate. The minor amounts of other multifunctional isocyanates can range from 0.1 percent to 50 percent or more, preferably from 0 percent to 40 percent, more preferably from 0 percent to 30 percent, even more preferably from 0 percent to 20 percent and most preferably from 0 percent to 10 percent by weight of the total polyfunctional isocyanate used in the formulation. Blocked monomers of these isocyanate may also be added to the composition.

Due to the defined isomer ratios, the isocyanurate polyisocyanates of the present invention have advantageous properties, such as high reactivity. In additions, coatings prepared from such isocyanurate polyisocyanates exhibit improved Vickers hardness to Gardner impact ratios giving a coating with a good hardness to flexibility balance as compared to conventional aliphatic isocyanates.

The blocking agents for use in the present invention generally contain an active hydrogen, (hydrogen attached to oxygen, sulfur or nitrogen) which will react with the diisocyanates and the product is reversible, that is deblocks, thermally. Representative blocking agents are derivatives selected from oximes phenols, active methylenes, imidazoles and caprolactam

Suitable oximes include, for example, methylethylketone oxime, methylethyl ketoxime, acetone oxime, acetaldoxime, formaldoxime and cyclohexanone oxime.

Representative examples of lactams include ε-caprolactam, γ-butyrolactam, δ-valerolactam and pyrrolidone. Other lactams which may be used as a blocking agent are as those described in U.S. Patent 4,150,211.

Examples of phenol derivatives include phenol, cresol, ethylphenol, butylphenol, nonylphenol, dinonylphenol, styrenated phenol, and hydroxybenzoic acid esters.

Representative blocking agents containing active methylene derivatives which may be used include dimethyl malonate, diethyl malonate, methyl acetoaetate, ethyl acetoacetate, and acetylacetone.

Examples of imidazole blocking agents include imidazole 2-methylimidazole and 2,5-dimethylimidazole.

For the preparation of the isocyanurate group-containing polyisocyanates, the organic diisocyanates are cyclized in the presence of the trimerization catalyst and, if desired, in the presence of solvents and/or assistants, such as co-catalysts, expediently at elevated temperature, until the desired isocyanate (NCO) content has been reached. The reaction is then terminated by deactivating the catalyst. If desired, the excess monomeric diisocyanate is separated off, preferably by distillation with the aid of a thin-film evaporator. Depending on the type and amount of catalyst used and on the reaction conditions used, isocyanurate group-containing polyisocyanate mixtures are obtained which can have different content of isocyanurate groups or oligomeric isocyanates. As used herein, the term trimer will generally refer to molecules containing one or more isocyanurate ring structures. For purposes of this invention, an isocyanate containing one isocyanurate ring structure is referred to herein as IR1. Molecules containing two isocyanurate ring structures are referred to herein as IR2. As a general class, unless otherwise noted, compounds containing 2 or more isocyanurate rings based on the polyisocyanates of the present invention are referred to as oligomeric trimers.

Examples of suitable trimerization catalyst are tertiary amines, phosphines, alkoxides, metal oxides, hydroxides, carboxylates and organometallic compounds. Examples of trimerization catalysts which have proven highly successful are tetraalkylammonium hydroxide, tris-(N,N-dialkylaminoalkyl)-s-hexahydrotriazines and organic salts of weak acids containing tetraalkylammonium groups or hydroxyalkylammonium groups, for example tris-(N,N-dimethylaminoproyl)-s-hexahydrotriazine, trimethyl-N-w-hyroxypropylammonium 2-ethylhexanoate and N,N-dimethyl-N-hydroxyethyl-N-2-hydroxypropylammonium hexanoate. Due to the their simple preparation and purification, preferred trimerization catalysts are trialkylhydroxyalkylammonium salts, for example N,N,N-trimethyl-N-2-hydroxypropylammonium p-tert-butylbenzoate and in particular N,N,N-trimethyl-N-2-hydroxypropylammonium 2-ethylhexanoate. Trimerization catalysts, which can also cause the formation of uretedione groups and oligomeric isocyanurate groups as byproducts, are usually used in an amount of from 0.001 to 0.5 percent by weight, preferably from 0.005 to 0.1 percent by weight, based on the weight of the diisocyanate. The trimer may also be produced by the use of a heterogeneous catalyst.

Alternatively, the isocyanurate trimer may be prepared by trimerization with a heterogeneous catalyst, see for example WO 93/18014 Proper control of the solid support and the active groups on the catalyst can result in the formation of an oligomeric mixture of isocyanurate trimers with very narrow polydispersity, that is, a product containing less than 50 percent IR1 and more than 25 percent of IR2, preferably less than 40 percent IR1 and more than 30 percent IR2. This type of distribution provides high average molecular weight products with low viscosity.

After the desired amount of isocyanurate groups has formed, which can be determined analytically by determination of the of the NCO content of the reaction mixture, the trimerization catalyst is usually deactivated. Examples of suitable deactivators are inorganic and organic acids, the corresponding acid-halides and alkylating agents. Specific examples of deactivators include phosphoric acid, monochloroacetic acid, dodecylbenzene/sulfonic acid, benzoyl chloride, dimethyl sulfate and dibutyl phosphate. The deactivators can be employed in amount from 1 to 200 mole percent, preferably from 20 to 100 mole percent, based on the amount of trimerization catalyst. The catalyst can also be deactivated by thermolysis. Typical thermal deactivation temperatures are greater than 130°C and lower than the decomposition temperatures of the isocyanate, generally less than 200°C.

For the preparation of the isocyanurate, the organic diisocyanate are partially cyclized at from 30 to 120°C, preferably at from 60 to 110°C, in the presence of the trimerization catalysts, advantageously under an atmosphere of gases which are inert under the reaction conditions, for example nitrogen. Generally the cyclized reaction is carried out to leave a monomer content of less than 80 percent. Preferably the reaction is carried out to give a monomer content of less than 70 percent. Generally at high conversions the amount of monomer remaining in the reaction mixture is between 20 and 40 percent. More preferably the reaction is carried out to give a final monomer content of less than 65 percent. The desired NCO content of the reaction mixture (that is, trimer and unreacted monomer) is generally from 20 to 40 percent by weight. Preferably the desired NCO content of the reaction mixture is from 22 to 38 percent by weight and more preferably from 23 to 35 percent by weight. After the desired NCO content is reached, the trimerization catalyst is deactivated and the isocyanurate formation is thus ended. After removal of the unreacted monomer, the NCO content of the trimer and trimer oligomers (IR1, IR2, and higher oligomers) is generally from 12 to 30 percent by weight and more preferably from 15 to 21 percent by weight of the isocyanurate polyisocyanate.

The reaction product will contain monomeric species, for example, isocyanurates having a single ring structure, as well as oligomeric species, for example, isocyanurates having two or more ring structures. Preferably IR1 is present in the composition from 20 to 80 percent by weight of the composition. More preferably the IR1 content is from 25 to 70 percent by weight of the composition. Most preferably the IR1 content is from 25 to 65 percent by weight of the composition. In some applications, it may be desired that the IR1 content is from 30 to 60 percent by weight of the composition. Generally the composition will contain from 5 to 40 percent by weight of IR2. It is not necessary for the IR1 and IR2 components to be 100 percent of the composition as higher oligomers may also be present.

It is generally preferred to produce an oligomeric mixture of the aliphatic isocyanate trimer (isocyanurate) with an average functionality greater than 3.0. The average functionality of the trimer is controlled by the degree of conversions of the monomer and the choice of catalyst. The functionality of the final composition may be decreased by the addition of blocked monomer as described herein.

For the present invention, different polyisocyanates may be mixed prior to the trimerization step, or trimers and higher oligomers of the individual isomers may be formed and then blended together. For example, trimers and higher oligomers of the 1,3-and 1,4-isomers of bis(isocyanatomethyl)cyclohexane may be separately produced and the products mixed, or the 1,3- and 1,4-isomers can be present together before the trimerization step. In a similar manner, the isocyanurate polyisocyanates containing multifunctional isocyanates other than bis(isocyanatomethyl)cyclohexane can be produced by having the other multifunctional isocyanates present prior to trimerization or produced separately and blended in with the isocyanurate polyisocyanates produced from the bis(isocyanatomethyl)cyclohexane isomers. It is generally preferred to produce isocyanurate polyisocyanates from the 1,3- and 1,4- isomers when both isomers are present in the initial reaction mixture. It is also preferred that any other multifunctional isocyanates be present prior to the start of or during the trimerization reaction.

In one embodiment of the present invention, it is preferred to use as the starting polyisocyanate a mixture of 1,3- and 1,4-bis(isocyanatomethyl)cyclohexane monomers with an additional cyclic or alicyclic isocyanate. In one embodiment, the 1,3-and 1,4-bis(isocyanatomethyl)cyclohexane monomer are used in combination with 1,6-hexamethylene diisocyanate (HDI), isophorone diisocyanate (IPDI) or a mixture thereof. When HDI and/or IPDI is used as an additional polyfunctional isocyanate in addition to the bis(isocyanatomethyl)cyclohexane, HDI and/or IPDI is added in an amount of up to 50 percent by weight of the total polyfunctional isocyanate. Preferably HDI and/or IPDI is added to comprises up to 40 percent by weight of the total polyfunctional isocyanate. More preferably, HDI and/or IPDI is added to comprise up to 30 percent by weight of the total polyfunctional isocyanate.

The production of the isocyanurate polyisocyanates of the present invention is preferably done in the absence of a solvent. If desired, a solvent may be used which is inert toward the respective starting materials. Preference is given to using organic solvents such as diethyl ether, tetrahydrofuran, acetone, 2-butanone, methyl isobutyl ketone, ethyl acetate, butyl acetate, benzene, toluene, chlorobenzene, o-dichlorolbenzene, xylene, methyoxyethyl acetate, methoxypropyl acetate, ethyl-3-ethoxy propionate, dimethylfoxmamide, dimethylacetamide or solvent naphtha.

The polyisocyanate containing isocyanurate groups is reacted with a stoichiometric quantity of blocking agent, that is, one mole of NCO per mole of NCO reactive group on the blocking agent, at temperatures of from 100 to 200°C, preferably from 120 to 160°C. Preferably the blocking agent is added at a slight stoichiometric excess, for example 1.1:1. The reaction proceeds exothermally. The conversion rate of the addition reaction may be increased by the addition of a suitable catalyst. Preferably, prior to the blocking step, residual monomer is removed from the isocyanurate composition.

The reaction between the isocyanate the blocking agent can be done in the presence of a solvent. Any light liquid organic substance may be used as the reaction medium (solvent) provided the substance has no functionality capable of reacting with an isocyanate group. Examples of such organic reaction medium liquids include those listed above as a potential solvent for the formation of the isocyanurate composition. The solvent is generally added to decrease the viscosity of the isocyanurate composition, generally less than 30 wt percent. The addition of a solvent generally enhances the kinetics of the blocking step.

It is also possible to prepare the blocked polyisocyanate containing isocyanurate groups by carrying out the trimerisation reaction and the blocking reaction simultaneously.

It is also possible to prepare the blocked polyisocyanate containing isocyanurate groups by partially blocking the monomer and subsequently trimerizing the remaining free isocyanate group. An intermediate partially blocked isocyanate reactant is formed by reacting a sufficient quantity of the blocking agent with the organic diisocyanate to block less than 50 percent of the isocyanate groups, and more preferably, less than 40 percent of the isocyanate groups. The extent of isocyanate blocking may be determined by isocyanate group titration. As the isocyanate moieties of the 1,3- and 1,4-isomers of bis(isocyanatomethyl) cylcohexane have similar reactivity, the final product will contain a distribution of molecules where all the isocyanate groups are blocked, molecules where no isocyanate groups are blocked and molecules where are a fraction of the isocyanate groups are blocked.

After forming the above partially blocked organic diisocyanate intermediate, the intermediate is trimerized to form a polyisocyanate comprising of a mixture of isocyanurate blocked polyisocyanates and blocked monomer.

The thermally dissociative blocked polyisocyanates of the present invention can be used as crosslinking or hardening component of coating composition which will be apparent to those skilled in the art. The coating compositions further constitute, in addition to the blocked polyisocyanate, at least one polyhydroxy compound having at least two bound hydroxyl groups.

Examples of polyhydroxy compounds for use in coating composition include aliphatic hydrocarbon polyols, polyether polyols, polyester polyols, epoxy resins, fluoropolyols, and acrylic polyols. Preferably aliphatic polyester and acylic polyols are used.

Examples of the aliphatic hydrocarbon polyols include a polybutadiene containing a terminal hydroxyl group and a hydrogenated product thereof. Examples of the polyether polyols include polyether polyols obtainable by addition-reacting alkylene oxides such as ethylene oxide and propylene oxide singly or as a mixture thereof with polyhydric alcohols such as glycerin and propylene glycol singly or as a mixture thereof, polytetramethylene glycols, polyether polyols obtainable by reacting alkylene oxides with polyfunctional compounds such as ethylenediamine and ethanolamine, and so-called polymer polyols obtainable by polymerizing acrylamide using these polyethers as media.

Examples of the polyester polyols include polyester polyol resins obtainable by condensation reacting dibasic acids selected from the group consisting of carboxylic acids such as succinic acid, adipic acid, sebacic acid, dimeric acid, maleic anhydride, phthalic anhydride, isophthalic acid, and terephthalic acid singly or in admixture with polyhydric alcohols selected from the group consisting of ethylene glycol, propylene glycol, diethylene glycol, neopentyl glycol, trimethylolpropane and glycerin singly or in admixture, and polycaprolactone polyols obtainable by a ring-opening polymerization of ε-caprolactone using polyhydric alcohols.

The epoxy resins include, for example, those of novolak type, beta-methylepichlorohidrin type, cyclic oxirane type, glycidyl ether type, glycol ether type, epoxy type of aliphatic unsaturated compound, epoxidated fatty acid ester type, polycarboxylic acid ester type, aminoglycidyl type, halogenated type and resorcin type, and the modified resins of these epoxy resins with amino compounds, polyamide compounds.

The fluoropolyols include, for example, copolymers of fluoroolefins and any of cyclohexylvinyl ether, hydroxyalkylvinyl ethers, and vinyl esters of monocarboxylic acids.

The acrylic polyols include, for example, those which are obtainable by copolymerizing polymerizable acrylic monomers having one or more active hydrogens in one molecule with other monomers copolymerizable therewith. Examples of the acrylic monomers having one or more active hydrogens in one molecule include a single one or mixed monomers selected from the group consisting of acrylic acid esters having active hydrogen such as 2-hydroxyethyl acrylate, 2- hydroxypropyl acrylate, and 2- hydroxybutyl acrylate, methacrylic acid esters having active hydrogen such as 2-hydroxydiethyl methacrylate, 2- hydroxypropyl methacrylate, and 2-hydroxybutyl methacrylate, and (meth)acrylic acid esters having polyvalent active hydrogen such as acrylic acid monoesters or methacrylic acid monoesters of glycerin and acrylic acid monoesters or methacrylic acid monoesters of trimethylolpropane. Examples of the other monomers copolymerizable with said monomers include acrylic acid esters such as methyl acrylate, ethyl acrylate, isopropyl acrylate, n- butyl acrylate and 2-ethylhexyl acrylate, and methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate. If necessary, a single one or a mixture of other polymerizable monomers, for example, unsaturated carboxylic acids such as acrylic acid, methacrylic acid, maleic acid and itaconic acid, unsaturated amides such as acrylamide, N-methylolacrylamide and diacetoneacrylamide, styrene, vinyltoluene, vinyl acetate, and acrylonitrile, may be additionally used in copolymerization.

Of these polyols, especially preferred are acrylic polyols and polyester polyols having an equivalent weight from 100 to 5,000, preferably from 250 to 3,000 and more preferably from 500 to 2,000 and a number-average molecular weight of 300 to 40,000, preferably 500 to 30,000. The polyols can have a functionality of 2 to 8 while polyols with a functionality of 2 to 4 are preferred.

The equivalent ratio of the blocked isocyanate groups in the thermally dissociative blocked polyisocyanate and the hydroxyl groups in the polyhydroxy compound in the coating composition of the present invention is determined depending upon the desired properties of the coating film, and is usually in the range of 0.4:1 to 2:1, preferably in the range of 0.5:1 to 1.5:1; more preferably the range is 1:1 to 1.1:1.

The coating compositions may also contain other additives such as pigments, dyes, fillers, leveling agents and solvents. The coating composition may be applied to the substrate to be coated in solution or from the melt by conventional methods such as painting, rolling pouring or spraying. For a solvent based system, the solvent can be optionally selected, depending upon the uses and purposes, from hydrocarbons such as benzene, toluene, xylene, cyclohexane, mineral spirits, and naphtha; ketones such as acetone, methyl ethyl ketone, and methyl isobutyl ketone; esters such as ethyl acetate, n-butyl acetate, and cellosolve acetate; and alcohols such as butanol and isopropyl alcohol. These solvents may be used singly or in combination of at least two types thereof.

To prevent the coating substances from sticking together if left in storage for some time, they may be treated with a suitable powder. Examples of suitable powders include talcum or finely divided silicates which may also contain organic groups, such as the silicates obtained by hydrolysis of methyl trichlorosilane. Finely dispersed calcium phosphate and aluminum sulphate which may be obtained from the decomposition of higher aluminum alcoholates are also suitable.

Examples of levelling agents and gloss improvers include polyvinyl butyrals, copolymers of n-butyl acrylate and 2-ethylhexyl acrylate, ketone-aldehyde condensation resins, solid silicone resins and mixtures of zinc soaps, fatty acid and aromatic carboxylic acids.

Commercially available sterically-hindered polyfunctional phenols, including high molecular weight phenols of this type, have proved to be suitable for use as heat stabilizers and anti-oxidants.

In general, to prepare the mixtures according to the present invention, the blocked isocyanate, polyhydroxyl compound and any additives, are vigorously mixed together, preferably using an extruder or a heatable kneader or some other powerful mixing device, for example a double-Z kneader. The individual components are preferably mixed in the molten state at a temperature too low for cross-linking.

When the mixtures according to the present invention have been homogenized, they are cooled and the solid substance thereby obtained is milled in a commercial mill to be reduced to particles within a maximum range of from 0.01 to 0.05 mm, and, if necessary, particles larger than 0.09 mm are removed in a screening machine.

When the mixtures according to the present invention are used according to the present invention for coating substrates, they may be applied by the whirl sintering process, the electrostatic powder coating process or the electrostatic fluidized bed process. The coated substrates are then heated in a stoving oven in which they are exposed to temperatures at which the solid lacquer powder particles melt, coalesce to form a homogeneous film and finally undergo cross-linking with elimination of the masking agent. This means that the coated substrates are generally exposed to temperatures of from 140 to 280°C, preferably from 120 to 180°C. The isocyanate groups liberated under these conditions react with the hydroxyl groups of the polyhydroxyl component to form high quality polyurethane films.

The thus prepared coating composition can be coated by any customary coating methods such as spray coating, dip coating, roll coating, and electrodeposition coating.

The coating composition prepared by employing the above-described blocked products or the hardener compositions can be used as topcoats or intercoats of automobiles, chip resistant coatings, coatings for automobile parts, coatings for precoated metals and anticorrosive steel plates of metallic articles such as appliances and business machines, coatings for building materials, coatings for plastics, adhesion imparting agents, sealing agents, and electrodeposition coatings. In addition the compositions containing the blocked isocyanate and polyhydroxyl compound can be used as adhesive, adhesion-imparting agent, sealing agent.

The coatings containing the blocked isocyanates of the present invention may also be used to produce high quality, impact-resistant, weathering- and solvent-resistant coatings on any heat-resistant substrates, such as metals, glass, ceramics and, if desired, also wood.

When used in a solvent-based application, the trimer is mixed in a solvent with a suitable acrylic polyol or aliphatic polyester polyol and optional additives. Any aprotic solvent which does react with the crosslinker after deblocking can be used for producing a solvent based coating. Commonly used solvents for solvent-based coatings include diethyl ether, tetrahydrofuran, acetone, 2-butanone, methyl isobutyl ketone, ethyl acetate, butyl acetate, benzene, toluene, chlorobenzene, o-dichlorolbenzene, xylene, methyoxyethyl acetate, methoxypropyl acetate, ethyl-3-ethoxy propionate, dimethylformamide, dimethylacetamide or solvent naphtha. Solvent-based systems generally contain from 40 to 80 percent by weight of the blocked isocyanate and polyhydroxyl compound. These formulations are generally applied to substrates such as metal and plastics. After the removal of the solvent by gradual heating, the blocked isocyanate trimer is deblocked by heat and the trimer immediately reacts with the polyol to form a high molecular weight polymer coating. For coating plastics, to minimize thermal deformation of the plastic, a blocking agent with a lower deblocking temperatures is preferred, for example, 120 to 160°C.

The following examples are provided to illustrate the present invention. The examples are not intended to limit the scope of the present invention and should not be so interpreted. All percentages are by weight unless otherwise noted.

### Examples

The ingredients and tests used in the examples are as described in the following glossary: Crosslinking Agent 1 - An adduct of isophorone diisocyanate (IPDI) blocked with caprolactam commercially available from Degussa Corporation as VESTAGON® EP B 1400 with an equivalent weight of 310.

Crosslinking Agent 2 - A polyisocyanurate of an approximate 1:1 mixture of 1,3-cyclohexane-bis(isocyanatomethyl) and 1,4-cyclohexanebis(isocyanatomethyl) blocked with caprolactam with an equivalent weight of 345.

Crosslinking Agent 3 - A polyisocyanurate of 1,3-cyclohexane-bis(isocyanatomethyl) blocked with caprolactam with an equivalent weight of 340.

Trimer 1 - A 3,5-dimethyl pyrazole (DMP)adduct of the polyisocyanurate of an approximately 1:1 mixture of 1,3-cyclohexane-bis(isocyanatomethyl) and 1,4-cyclohexanebis(isocyanatomethyl) with an equivalent weight of 461.

Trimer 2 - A 3,5-DMP adduct of the polyisocyanurate of isophorone diisocyanate (IPDI) with an equivalent weight of 494.

Trimer 3 - A 3,5-DMP adduct of the polyisocyanurate of hexamethylene diisocyanate (HDI) with an equivalent weight of 399.

Polyester Resin - A saturated, hydroxylated polyester resin commercially available from DSM Resins Corporation as Uralac P 6504.

Polymer 1 - An acrylic polyol commercially available from S.C. Johnson as Joncryl 920 with an equivalent weight of 500.

Polymer 2 - An polyester polyol commercially available from The Dow Chemical Company as Tone 0240 with an equivalent weight of 1000.

Pigment - A titanium dioxide commercially available from DuPont Corporation as Ti-Pure® R-706.

Additive 1 - A degassing agent, Benzoin (98 percent), available from Aldrich.

Additive 2 - A flow control agent commercially available from Solutia as Modaflow Powder III.

Additive 3 - A flow additive commercially available from BYK Chemie as BYK-320.

Catalyst 1- metal catalyst commercially available as Fastcat 4100.

Catalyst 2 - Dibutyltin dilaurate commercially available from Air Products Company as Dabco T-12.

Solvent 1 - n-Butyl acetate commercially available from The Dow Chemical Company.

Solvent 2 - Ethyl-3-ethoxy propionate commercially available from The Dow Chemical Company.

Film thickness of the coating is determined by ASTM D 1186.

Gel time is determined by rubbing the powder coating with the tip of a wooden applicator stick over a hot plate at 200-204°C until a solid gel is produced.

Gloss is determined by following ASTM D 523.

The pencil hardness of the film is measured by following ASTM D 3363. Pendulum Hardness of the coating is determined by using a Konig pendulum hardness tester and is reported in seconds.

Cross Hatch Adhesion of the coating is determined by using a Cross Hatch Cutter Kit and following ASTM D3359.

The acid etch resistance of the coating is determined by using a BYK Chemie gradient temperature oven and is reported as the lowest temperature (in °C) that a 10 percent solution of H₂SO₄ would cut through to the substrate if left on the coating for 15 minutes. The higher the temperature, the more resistant the coating is to acid.

Solvent resistance of the coating is reported as the number of methyl ethyl ketone (MEK) double rubs that are required to cut through the coating to the substrate.

Flexibility is measured using a conical mandrel following ASTM D522.

Impact resistance of the coating was determined by using a Gardner impact tester and following ASTM D 2794.

### Preparation of Blocked Polyisocyanurates for powder coatings

The preparation of the polyisocyanurate of a 1:1 mixture of 1,3- and 1,4-cyclohexane-bis (isocyanatomethyl) is as per the teachings of publication WO 2004/078820. The blocked material is prepared according to the following procedure. To a 1.0 L glass flask equipped with a gas bubbler, mechanical stirrer, thermometer and condenser is added 100 grams of the polyisocyanurate at 70 percent solids in butylacetate. Dry nitrogen is bubbled through the reactor contents while it is heated at 70°C and 34 grams of e-caprolactam is added to the reaction mixture. The reaction temperature is maintained between 100 and 120°C until the reaction is complete. The reactor contents are cooled down to 60°C and 100 grams of hexane is added. The reactor contents are then cooled down below room temperature and the white precipitate is filtered and washed with cold hexane. The white powder is dried in a vacuum oven for 24 hours. Adducts of other polyisocyanates/polyisocyanurates are done in a similar way.

### Preparation of Blocked Polyisocyanurates for solvent-based coatings

The preparation of the polyisocyanurate of a 1:1 mixture of 1,3- and 1,4-cyclohexane-bis (isocyanatomethyl) is as per the teachings of publication WO 2004/078820. The blocked material is prepared according to the following procedure. To a 1.0 L glass flask equipped with a gas bubbler, mechanical stirrer, thermometer and condenser is added 463.3 grams of the polyisocyanurate at 70 percent solids in butylacetate. Dry nitrogen is bubbled through the reactor contents while it is heated at 70°C and 137.46 grams of dimethyl pyrazole is added to the reaction mixture. The reaction temperature is maintained between 100 and 120°C until the reaction is complete. The reactor contents are cooled down to 60°C and 58.8 grams of butyl acetated is added. Adducts of other polyisocyanates/polyisocyanurates are done in a similar way.

### Examples 1-3 (Powdered Coatings)

For example 1, the following components are added to a high-speed mixer: 400.3 grams of Polyester Resin, 200 grams of Pigment, 90.5 grams of Crosslinking Agent 1 (NCO:OH equivalent ratio of 1:1), 2.02 grams of Additive 1, 6.07 grams of Additive 2, and 4.0 grams of Catalyst. All components are premixed at 2300 rpm for 43 seconds to ensure homogeneous mixing and fragmentation of solids into small particles. The resulting intimate mixture is processed through a twin-screw extruder to produce a uniform viscous melt. The 3-zone extrusion temperatures are maintained at 35°C, 70°C and 90°C at a processing speed of 400 rpm. Molten extrudates are then passed through a pair of water-cooled squeeze rolls producing friable products. The products are then pulverized using a hammer mill fed slowly into the grinding chamber.

The final powders are electrostatically sprayed onto iron phosphated steel panels (Q Panel S-412-I). Coatings cured at 200°C for 10 minutes. Final film thicknesses ranges from 50-8 to 54.4 µm (2.0 to 2.14 mils). The oven-cured coatings are allowed to stand for 4 hours before their physical properties are measured.

The process of example was followed to produce examples2 and 3, except that the amount of each component varied in order to keep an NCO:OH equivalent ratio constant at 1:1 for each system. The amounts used for these examples are given in Table 1.

**Table 1**

| | Example 1* (Crosslinking Agent 1) | Example 2 (Crosslinking Agent 2) | Example 3* (Crosslinking Agent 3) |
|---|---|---|---|
| **Material** | **Parts by Weight** | **Parts by Weight** | **Parts by Weight** |
| Polyester Resin | 400.3 | 400.3 | 380 |
| Pigment | 200 | 200 | 200 |
| Crosslinking Agent 1 | 90.5 | - | - |
| Crosslinking Agent 2 | -- | 98.81 | - |
| Crosslinking Agent 3 | - | - | 95.2 |
| Additive 1 | 2.02 | 2 | 2.9 |
| Additive 2 | 6.07 | 6.07 | 5.77 |
| Catalyst 1 | 4.0 | 4.0 | 3.82 |

| | | | |
|---|---|---|---|
| *Examples 1 and 3 are comparative. | | | |

The properties of the coatings are given in Table 2. The results show that the impact resistance and hardness of a coating based on the crosslinker of this invention (Crosslinking Agent 2) are superior to the coatings based on Crosslinking agents 1 and 3.

**Table 2**

| Tests | Example 1* (Crosslinking Agent 1) | Example 2 (Crosslinking Agent 2) | Example 3 * (Crosslinking Agent 3) |
|---|---|---|---|
| Gel Time (sec.) | 79.5 | 72.7 | 82.5 |
| Gloss, 20° | 57.6 | 66.8 | 67.4 |
| Gloss, 60° | 87.2 | 90.5 | 90.6 |
| Pencil Hardness | H | H | H |
| Pendulum Hardness (sec.) | 187 | 201 | 198 |
| Impact Resistance (kg-m) ((in.-lb.)) | 88.4 (53.3) | 238.4 (143.7) | 99.5 (60) |

| | | | |
|---|---|---|---|
| *examples 1 and 3 are comparative. | | | |

### Examples 4 to 8 (Solvent Based Coatings)

10.00 grams of Polymer 1 are added to a clean, dry, wide-mouthed bottle and then 8.8 grams of Solvent 1 and 3.0 grams of Solvent 2 are mixed with Polymer 1. For example 4, 9.67 grams of Trimer 1 (0.05 percent molar excess of isocyanate to hydroxyl groups), 0.0157 grams of Additive 3 and 0.05 weight percent (on total solids + solvent) of Catalyst 2 are then added to the polymer solution. The formulation is then mixed thoroughly and allowed to sit for five minutes to allow for the air bubbles to dissipate. The formulation is then drawn down on polished cold rolled steel panels (which are cleaned with acetone and dried in an oven) using a #46 wire wound rod to achieve a dry film thickness between 38.1µm to 50.8µm. (1.5 to 2.0 mils). The wet coating films are allowed to flash at room temperate for 10 minutes and then baked in an oven at 150°C for 30 minutes. The oven-cured coatings 10 minutes and then baked in an oven at 150°C for 30 minutes. The oven-cured coatings are allowed to stand for 24 hours before their physical properties are measured For example 5,10.37 grams of Trimer 2 was used in the place of Trimer 1. For example 6, 8.38 grams of Trimer 3 is used in the place of Trimer 1. For example 7, 9.94 grams of Trimer 4 is used in the place of Trimer 1. For example 8, 9.84 grams of Trimer 5 is used in the place of Trimer 1. The properties of the resulting coatings are given in Table 3.

**Table 3**

| | | | | Impact | | | Acid Etch | Cross Hatch Adhesion |
|---|---|---|---|---|---|---|---|---|
| Example | Trimer | Konig | Pencil Hardness | Direct | Indirect | 100 MEK Double Rubs | °C | No Damage (5B) |
| 4 | 1 | 177 | 3H | 70 | 24 | Pass | 88 | 5B |
| 5* | 2 | 180 | 3H | 40 | <24 | Pass Pass (slight | 90 | 5B |
| 6* | 3 | 130 | F | 200 | 200 | scratches) | 82 | 5B |

| | | | | | | | | |
|---|---|---|---|---|---|---|---|---|
| *Examples 5 and 6 are Comparative | | | | | | | | |

The results illustrate that Trimer 1 when used in a solvent based coating, gives a better balance of hardness and flexibility relative to Trimers 2 and 3 and better acid etch resistance relative to Trimmer 3.

### Examples 7 and 8:

8.25 grams of Polymer 1 and 1.65 grams of Polymer 2 (a 5/1 weight ratio of Polymer 1 to Polymer 2) are added to a clean, dry, wide-mouthed bottle and then 7.59 grams of Solvent 1 and 2.90 grams of Solvent 2 are added to the polymer mixture. For example 8, 8.77 grams of Trimer 1 (.05 percent molar excess of isocyanate to hydroxyl groups), 0.0275 grams of Additive 3 and 0.05 weight percent (on total solids + solvent) of Catalyst 2 are then added to the polymer solution. The formulation is then mixed thoroughly and allowed to sit for five minutes to allow for the air bubbles to dissipate. The formulation is then drawn down on polished cold rolled steel panels (which are cleaned with acetone and dried in an oven) using a #46 wire wound rod to achieve a dry film thickness between 38.1 to 50.8µm (1.5 to 2.0 mils). The wet coating films are allowed to flash at room temperate for 10 minutes and then baked in an oven at 150°C for 30 minutes. The oven-cured coatings were allowed to stand for 24 hours before their physical properties are measured. For example 9,10.50 grams of Trimer 2 was used in the place of Trimer 1.

The properties of the obtained coatings are given in Table 4.

**TABLE 4**

| | | | | Impact | | Cross Hatch Adhesion |
|---|---|---|---|---|---|---|
| Examples # | Trimer | Konig | Pencil Hardness | Direct | Indirect | No Damage (5B) |
| 8 | 1 | 160 | H | 200 | 200 | 5B |
| 9* | 2 | 142 | H | 200 | 200 | 5B |

| | | | | | | |
|---|---|---|---|---|---|---|
| *Is a Comparative Example | | | | | | |

The results from examples 8 and 9 illustrate that Trimer 1 gives better balance of hardness and flexibility relative to Trimer 2.

## Claims

1. A thermally dissociative blocked polyisocyanate composition containing a thermal dissociative blocking agent selected from oximes, phenols, caprolactam, imidazoles and active methylene compounds, and isocyanurate moieties wherein the isocyanurate is the reactions product of bis(isocyanotomethyl)cyclohexane wherein the bis(isocyanatomethyl)cyclohexane is a mixture comprising two or more of cis-1,3-bis(isocyanatomethyl)cyclohexane, trans-1,3-bis(isocyanatomethyl)cyclohexane, cis-1,4-bis(isocyanatomethyl)cyclohexane and trans-1,4-bis(isocyanatomethyl)cyclohexane with the proviso the composition comprises at least 5 weight percent of the 1,4-ismnex.

2. The composition of claims 1 wherein the composition contains at least 30 percent by weight of the polyisocyanate containing isocyanurate moieties.

3. The composition of claim 1 wherein the 1,4-isomer comprises 10-40 percent by weight of the composition.

4. The composition of claim 1 wherein from 0.1 to 50 weight percent of at least one polyisocyanate other than an isomer of bis(isocyantomethyl)cyclohexane is present in the mixture.

5. A coating composition comprises (a) a blocked isocyanurate isocyanate according to any one of claim 1 to 4 and (b) a polyhydroxyl compound.

6. The coating composition of claim 5 wherein the polyhydroxyl compound is selected from aliphatic hydrocarbon polyols, polyether polyols, polyester polyols, epoxy resins, fluoropolyols, and acrylic polyols.

7. The coating composition of claim 6 wherein the polyhydroxyl compound is a polyester polyol, an acrylic polyol or a combination thereof.

8. The coating composition of claim 5 wherein the equivalent ratio of blocked isocyanate groups and the hydroxyl groups in the polyhyroxyl compound is 0.4:1 to 2:1.

9. The coating composition of claim 6 wherein the coating is a solvent based coating.

10. The coating composition of claim 9 wherein the solvent is selected from diethyl ether, tetrahydrofuran, acetone, 2-butanone, methyl isobutyl ketone, ethyl acetate, butyl acetate, benzene, toluene, chlorobenzene, o-dichlorolbenzene, xylene, methyoxyethyl acetate, methoxypropyl acetate, ethyl-3-ethoxy propionate, dimethylformamide, dimethylacetamide, solvent naphtha or a combination thereof.

11. The coating composition of claim 9 where the composition contains from 40 to 80 percent by weight of the blocked isocyanate and polyhydroxyl compound.

12. A process for the preparation of a thermally dissociative blocked polyisocyanate composition containing isocyanurate moieties comprising reaction of a polyisocyanate with a thermally dissociative blocking agent selected from oxines, phenols, caprolactam, imidazoles and active methylene compounds at an isocyanate to isocyanate, reactive group on the blocking agent ratio to block less than 40 percent of the isocyanate groups, cyclizing the polyisocyanate in the presence of a trimerization catalyst, deactivating the trimerization catalyst when the desired degree of cyclization is reached, wherein the isocyanurate is derived from two or more of cis-1,3-bis(isocyanatomethyl)cyclohexane, trans-1,3-bis(isocyanatomethyl)cyclohexane, cis-1,4-bis(isocyanatomethyl)cyclohexane and trans-1,4-bis(isocyanatomethyl)cyclohexane with the proviso the composition comprises at least 5 weight percent of the 1,4-isomer.

## Patentansprüche

1. Thermisch dissoziative blockierte Polyisocyanat-Zusammensetzung, enthaltend ein thermisch dissoziatives Blockierungsmittel ausgewählt aus Oximen, Phenolen, Caprolactam, Imidazolen und aktiven Methylenverbindungen, und Isocyanurat-Reste, wobei das Isocyanurat das Reaktionsprodukt von bis(Isocyanatomethyl)cyclohexan ist, wobei das bis(Isocyanatomethyl)cyclohexan eine Mischung umfassend zwei oder mehr cis-1,3-bis(Isocyanatomethyl)cyclohexan, trans-1,3-bis(Isocyanatomethyl)cyclohexan, cis-1,4-bis(Isocyanatomethyl)cyclohexan und trans-1,4-bis(Isocyanatomethyl)cyclohexan ist, mit der Maßgabe, dass die Zusammensetzung mindestens 5 Gewichtsprozent des 1,4-Isomers umfasst.

2. Zusammensetzung nach Anspruch 1, wobei die Zusammensetzung mindestens 30 Gewichtsprozent des Polyisocyanats enthaltend Isocyanurat-Reste enthält.

3. Zusammensetzung nach Anspruch 1, wobei das 1,4-Isomer 10-40 Gewichtsprozent der Zusammensetzung umfasst.

4. Zusammensetzung nach Anspruch 1, wobei von 0,1 bis 50 Gewichtsprozent mindestens eines Polyisocyanats anders als ein Isomer von bis(Isocyanatomethyl)cyclohexan in der Mischung vorliegt.

5. Beschichtungszusammensetzung, die (a) ein blockiertes Isocyanuratisocyanat nach einem der Ansprüche 1 bis 4 und (b) eine Polyhydroxyl-Verbindung umfasst.

6. Beschichtungszusammensetzung nach Anspruch 5, wobei die Polyhydroxyl-Verbindung ausgewählt ist aus aliphatischen Kohlenwasserstoffpolyolen, Polyetherpolyolen, Polyesterpolyolen, Epoxyharzen, Fluorpolyolen und acrylischen Polyolen.

7. Beschichtungszusammensetzung nach Anspruch 6, wobei die Polyhydroxyl-Verbindung ein Polyesterpolyol, ein acrylisches Polyol oder eine Kombination davon ist.

8. Beschichtungszusammensetzung nach Anspruch 5, wobei das Äquivalent-Verhältnis von blockierten Isocyanat-Gruppen und den HydroxylGruppen in der Polyhydroxyl-Verbindung 0,4:1 bis 2:1 ist.

9. Beschichtungszusammensetzung nach Anspruch 6, wobei die Beschichtung eine Lösungsmittel basierte Beschichtung ist.

10. Beschichtungszusammensetzung nach Anspruch 9, wobei das Lösungsmittel ausgewählt ist aus Diethylether, Tetrahydrofuran, Aceton, 2-Butanon, Methylisobutylketon, Ethylacetat, Butylacetat, Benzol, Toluol, Chlorbenzol, o-Dichlorbenzol, Xylen, Methyoxyethylacetat, Methoxypropylacetat, Ethyl-3-ethoxypropionat, Dimethylformamid, Dimethylacetamid, Lösungsmittel Naphtha oder eine Kombination davon.

11. Beschichtungszusammensetzung nach Anspruch 9, wobei die Zusammensetzung von 40 bis 80 Gewichtsprozent des blockierten Isocyanats und der Polyhydroxyl-Verbindung enthält.

12. Verfahren zur Zubereitung einer thermisch dissoziativen blockierten Polyisocyanat-Zusammensetzung, enthaltend Isocyanurat-Reste, umfassend die Umsetzung eines Polyisocyanats mit einem thermisch dissoziativen Blockierungsmittels ausgewählt aus Oximen, Phenolen, Caprolactam, Imidazolen und aktiven Methylenverbindungen, bei einem Isocyanat-zu Isocyanat-reaktive Gruppe an dem Blockierungsmittel-Verhältnis, um weniger als 40 Prozent der Isocyanat-Gruppen zu blockieren, Zyklisieren des Polyisocyanats in Anwesenheit eines Trimerisierungskatalysators, Deaktivieren des Trimerisierungskatalysators, wenn der gewünschte Grad an Zyklisierung erreicht ist, wobei das Isocyanurat aus zwei oder mehr cis-1,3-bis(Isocyanatomethyl)cyclohexan, trans-1,3-bis(Isocyanatomethyl)cyclohexan, cis-1,4-bis(Isocyanatomethyl)cyclohexan und trans-1,4-bis(Isocyanatomethyl)cyclohexan stammt, mit der Maßgabe, dass die Zusammensetzung mindestens 5 Gewichtsprozent des 1,4-Isomers umfasst.

## Revendications

1. Composition de polyisocyanates bloqués thermiquement dissociables, comprenant un agent bloquant thermiquement dissociable, choisi parmi les oximes, les phénols, le caprolactame, les imidazoles et les composés à groupe méthylène actif, et des entités de type isocyanurate qui sont des produits de réaction du bis(isocyanatométhyl)-cyclohexane, lequel bis(isocyanatométhyl)-cyclohexane est un mélange formé de deux ou plus des cis-1,3-bis(isocyanatométhyl)-cyclohexane, trans-1,3-bis(isocyanatométhyl)-cyclohexane, cis-1,4-bis-(isocyanatométhyl)-cyclohexane et trans-1,4-bis(isocyanatométhyl)-cyclohexane, sous réserve que la composition contienne au moins 5 % en poids d'isomères 1,4.

2. Composition conforme à la revendication 1, laquelle composition contient au moins 30 % en poids de polyisocyanates contenant des entités de type isocyanurate.

3. Composition conforme à la revendication 1, dans laquelle les isomères 1,4 représentent 10 à 40 % du poids de la composition.

4. Composition conforme à la revendication 1, dans laquelle il y a, dans le mélange, de 0,1 à 50 % en poids d'au moins un polyisocyanate autre que les isomères de bis(isocyanatométhyl)-cyclohexane.

5. Composition de revêtement comprenant :
a) un isocyanate-isocyanurate bloqué, conforme à l'une des revendications 1 à 4,
b) et un composé polyhydroxylé.

6. Composition de revêtement conforme à la revendication 5, pour laquelle le composé polyhydroxylé est choisi parmi les polyols dérivés d'hydrocarbures aliphatiques, polyéther-polyols, polyester-polyols, résines époxy, fluoro-polyols et polyols acryliques.

7. Composition de revêtement conforme à la revendication 6, dans laquelle le composé polyhydroxylé est un polyester-polyol, un polyol acrylique ou une combinaison de tels composés.

8. Composition de revêtement conforme à la revendication 5, dans laquelle le rapport d'équivalents entre les groupes isosyanate bloqués et les groupes hydroxyle du composé polyhydroxylé vaut de 0,4/1 à 2/1.

9. Composition de revêtement conforme à la revendication 6, le revêtement étant un revêtement à base de solvant.

10. Composition de revêtement conforme à la revendication 9, pour laquelle le solvant est choisi parmi les suivants : éther diéthylique, tétrahydrofurane, acétone, 2-butanone, méthyl-isobutyl-cétone, acétate d'éthyle, acétate de butyle, benzène, toluène, chlorobenzène, ortho-dichlorobenzène, xylène, acétate de méthoxy-éthyle, acétate de méthoxy-propyle, 3-éthoxy-propionate d'éthyle, diméthyl-formamide, diméthyl-acétamide et solvant naphta, ainsi que leurs combinaisons.

11. Composition de revêtement conforme à la revendication 9, laquelle composition contient de 40 à 80 % en poids d'isocyanate bloqué et de composé polyhydroxylé.

12. Procédé de préparation d'une composition de polyisocyanates bloqués thermiquement dissociables comprenant des entités de type isocyanurate, lequel procédé comporte les étapes suivantes :
- faire réagir un polyisocyanate avec un agent bloquant thermiquement dissociable, choisi parmi les oximes, les phénols, le caprolactame, les imidazoles et les composés à groupe méthylène actif, en un certain rapport de l'isocyanate aux groupes de l'agent bloquant qui réagissent avec l'isocyanate, approprié pour que seuls moins de 40 % des groupes isocyanate soient bloqués,
- cycliser le polyisocyanate en présence d'un catalyseur de trimérisation,
- et une fois atteint le degré voulu de cyclisation, désactiver le catalyseur de trimérisation,
et dans lequel procédé l'isocyanurate dérive de deux ou plus des cis-1,3-bis(iso-cyanatométhyl)-cyclohexane, trans-1,3-bis(isocyanatométhyl)-cyclohexane, cis-1,4-bis-(isocyanatométhyl)-cyclohexane et trans-1,4-bis-(isocyanatométhyl)-cyclohexane, sous réserve que la composition contienne au moins 5 % en poids d'isomères 1,4.
